# EUROPEAN PATENT APPLICATION

(11) **EP 1 742 461 A1**
(43) Date of publication of application: **10.01.2007**
(21) Application number: 05736650.2
(22) Date of filing: 27.04.2005
(51) Int. Cl.: H04N 5/202

(54) **DISPLAY DEVICE**

(30) Priority: 27.04.2004 JP 2004130638
(71) Applicant: HITACHI, LTD., Chiyoda-ku Tokyo 100-8280 (JP)
(72) Inventor: FURUHATA, Mitsuyoshi; c/o Dig.Med.Div.Hitachi Ltd;, Yokohama-shi, Kanagawa; 2440817 (JP); SHIMIZU, Masashi; c/o Dig.Med.Div.Hitachi Ltd.;, Yokohama-shi, Kanagawa; 2440817 (JP); IWAHARA, Kenichi; c/o Dig.Med.Div.Hitachi Ltd.;, Yokohama-shi, Kanagawa; 2440817 (JP)
(74) Representative: Calderbank, Thomas Roger
(86) International application number: PCT/JP2005/008036
(87) International publication number: WO 2005/104532

(57) **Abstract**

A display device such as a projector and its adjusting system are provided which are arranged to easily adjust a brightness tracking (gamma) characteristic and a white balance of a displayed image. On the screen of the display device of the invention are displayed an image composed from a video signal, an adjustment item, adjustment patterns for aiding in gamma (white balance) adjustment and all the concerned adjustment values. The display device is arranged to execute the adjustments while the user is making sure of the adjusted states of a white area, a black area and a gray area therebetween. This arrangement thus allows the user to efficiently execute the adjustments according to his or her intended characteristic for a short length of time.

## Description

### INCORPORATION BY REFERENCE

The present application claims a priority of Japanese Patent Application No. 2004-130638 filed on April 27, 2004 and incorporates its contents in this application by reference.

### TECHNICAL FIELD

The present invention relates to a display device including a projector for expansively projecting an optical image formed on a display element and a direct view television having a plasma display panel or a liquid crystal panel served as a display element, and more particularly to the display device which is composed to display one or more adjustment patterns such as gamma adjustment and white balance on a display screen so that a user may easily execute those adjustments, and its adjusting method.

### BACKGROUND ART

A CRT (Cathode-Ray Tube) has been conventionally on the main stream of the display element. In the CRT, a characteristic of a brightness (luminance) of a displayed image against an input intensity level of a video signal, that is, a characteristic of a luminance against an input intensity level (referred simply to as an input level) of a video signal is non-linear in proportional to a γ-squared (normally, γ=2.2) input level of the video signal. (This nonlinearity is referred to as the "gamma characteristic".) Hence, the general TV receiver provided with the CRT supplies the video signal transmitted from the broadcasting station with the opposite nonlinearity (the characteristic of an input level against a luminance) to the foregoing nonlinearity, so that the characteristic of an input level of a video signal against a luminance output of a displayed image may be made linear.

In the meantime, a certain display element such as a liquid crystal panel has a different gamma characteristic (nonlinearity) from the foregoing γ value of γ=2.2. When the opposite nonlinear video signal, which is matched to the CRT, is entered into the liquid crystal panel, the characteristic of an input level of a video signal against a luminance output of a displayed image is not made linear. Hence, the display device provided with the display element except the CRT makes the characteristic of an input level of a video signal against a luminance output of a displayed image coincide with the (nonlinear) gamma characteristic provided in the CRT by correcting the nonlinearity of the display element so that the characteristic of an input level of a video signal against a luminance output of a displayed image is made linear. This correction is referred to as the "gamma correction" and the correction characteristic is referred to as the "gamma correction characteristic".

Further, even for the display device provided with the CRT, in some cases, it is preferable to change the characteristic of an input level against a luminance output according to each of various kinds of images. For example, for a motion picture, a gloomy image often appears. Hence, for the purpose of making a gloomy image eye-friendly to a watcher, the display device provides a capability of correcting the characteristic of an input level of a video signal against a luminance output so that the brightness (luminance) of a displayed image as an output is emphasized on a low-tone image input area.

Hereafter, those foregoing corrections included in the display device are referred to as the "gamma correction". The characteristic of the gamma correction is referred to as the "gamma correction characteristic". The adjustment to be executed to make the characteristic closer to this gamma correction characteristic is referred to as the "gamma adjustment".

In the meantime, the conventional gamma adjustment method of the display device is disclosed in the Patent Publication 1, for example. In the Patent Publication 1, an adjustment item, its adjustment value, a 10 STEP signal (adjustment pattern) served as a gray scale pattern for allowing a user to make sure of the adjusted state and so forth are displayed on the screen where the input image is displayed. Then, a user varies the adjustment value with an operation key. Based on the adjustment pattern, the user makes sure of the adjusted state.
Patent Document 1: JP-A-10-133163

### DISCLOSURE OF INVENTION

### PROBLEM TO BE SOLVED BY THE INVENTION

However, the technology of the foregoing Patent Publication 1 is intended to improve the efficiency of the gamma adjustment in a manufacturing premise or required when repairing a product deficiency.

Hence, when an ordinary user who uses the display device provided with the technology disclosed in the Patent Publication 1 tries to execute the gamma adjustment according to his or her favor, without adjusting skill or an equipment for the adjustment such as a signal generator and a measuring device, the user has difficulties in grasping the area of the displayed image being adjusted, the tone of the displayed image to be adjusted, the brightness (tone) of the image with which the tone being adjusted correspond, and what kind of adjustment to be executed with respect to the input image. Thus, it is not easy to adjust the image according to the user's favor.

The present invention is made in consideration of the foregoing matter, and it is an object of the present invention to provide a display device and its adjusting method which are arranged to easily adjust the image according to a user's favor for quite a short length of time.

### MEANS FOR SOLVING THE PROBLEM

In carrying out the object, according to the present invention, the display device is arranged to include gamma correcting means for gamma-correcting an input video signal, gamma adjusting means for displaying an adjusted state having an adjustment pattern signal used for the gamma adjustment and a gamma correction value, and video signal displaying means for extracting a specific still image from the input video signal and displaying the still image gamma corrected by the gamma correcting means on the screen, and the adjustment pattern signal, the gamma correction value and the gamma-corrected still image being displayed on the same screen. This arrangement allows a user to easily make sure of the adjusted state of a tone being adjusted, the adjusted state of another tone, and the adjusted state of the input image, so that the user may easily adjust the gamma correction value.

### ADVANTAGES OF THE INVENTION

The present invention makes it possible for the user to easily make sure of the adjusted state of the gamma characteristic. Hence, the invention may provide a gamma adjusting system and a display device which allow even an adjustor like an end user who does not have a skilled adjusting technique to easily adjust the brightness and the white balance according to his or her favor.

The other objects, features and the advantages of the present invention will be apparent from the following description of the embodiments of the present invention along the appended drawings.

### EMBODIMENTS

Hereafter, the embodiments of the present invention will be described with reference to the appended drawings. In these drawings, the elements having common functions to each other have the same reference numbers.

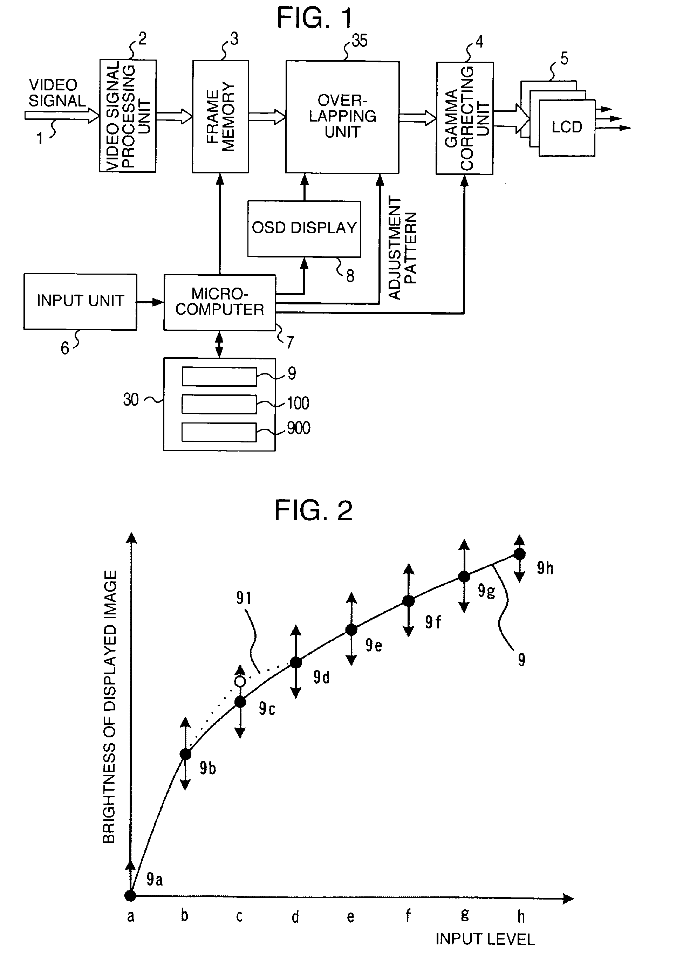

Fig. 1 is a schematic block diagram showing an embodiment of a display device to which the present invention is applied. At first, the block configuration will be described. In Fig. 1, a numeral 1 denotes an analog video signal sent from an outside signal source (not shown). A numeral 2 denotes a video signal processing unit for converting the inputted analog video signal into a digital video signal and performing a predetermined signal processing. A numeral 3 denotes a frame memory. A numeral 6 denotes an input unit composed of a remote controller, an operation panel or a communication line, for example. A numeral 7 denotes a microprocessor (referred to as a CPU) having an arithmetic control function. The CPU has a function of controlling the overall display device according to a program described in a built-in ROM (not shown) in response to an operation input given by the input unit 6. A numeral 30 denotes a nonvolatile memory in which plural pieces of gamma correction characteristic data 90 and plural pieces of adjustment pattern data 100 (to be discussed below) are pre-stored. A numeral 8 denotes an OSD menu display unit in which an adjustment menu image (to be discussed below) is formed under the control of the CPU 7. A numeral 35 denotes an overlapping unit for digitally overlapping an image read from the frame memory 3 and inputted therein, a menu display sent from the OSD menu display unit 8, and gray scale adjustment patterns stored in the memory 30 being inputted therein through the CPU 7. A numeral 4 denotes a gamma correcting unit for performing a predetermined gamma correction with respect to the input image according to the gamma correction characteristic set by the CPU 7. A numeral 5 denotes a liquid crystal panel served as a display element for displaying the gamma-corrected video signal. A numeral 900 located inside the memory 30 denotes user-set gamma-corrected data (to be discussed below).

In turn, the description will be turned to the operation of the display device. A video signal 1 is inputted from the outside signal source (not shown) into the video signal processing unit 2. This processing unit 2 converts the video signal 1 into the corresponding digital signal. The digital video signal is written in the frame memory 3. The video signal read out of the frame memory 3 is normally inputted into the gamma correcting unit 4 through the overlapping unit 35 as it is. The gamma correcting unit 4 performs a predetermined gamma correction with respect to the video signal. The corrected video signal is displayed as the corresponding image on the liquid crystal panel 5 served as the display element.

In a case that a menu display from the OSD menu display unit 8 appears (or both the menu display and the adjustment patterns of the gray scale pattern appear), the menu display (or both the menu display and the adjustment patterns) is overlapped on the corresponding image with the video signal read out of the frame memory 3 and the overlapped result is displayed on the image.

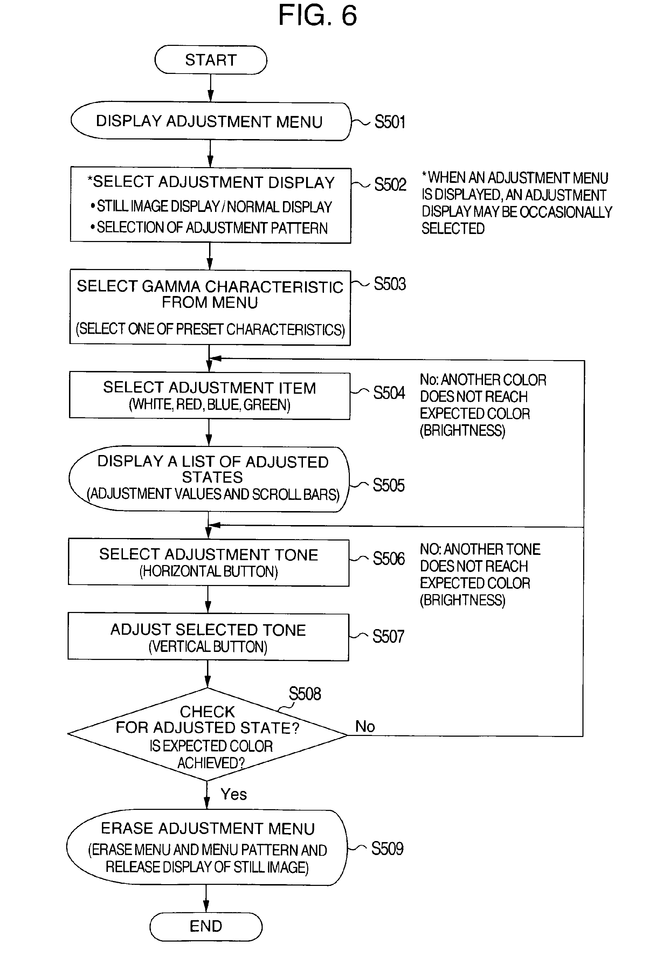

In a case that the gamma adjustment is selected on the adjustment menu screen to be discussed below, the CPU 7 controls to prohibit write of an input signal into the frame memory 3, stop the input image at a specific scene, and display the stopped input image on the liquid crystal panel 5. Of course, in this case, the gamma adjustment menu and the adjustment patterns are overlapped on the display (the details of which will be discussed below with reference to the flowchart of Fig. 6).

The memory 30 stores a plurality of gamma correction characteristics. A user may select a target gamma correction characteristic with the input unit 6 and set the gamma correction characteristic in the gamma correcting unit 4. The gamma correction characteristic set to the gamma correcting unit 4 may be adjusted by the user in the gamma adjustment of the adjustment menu to be discussed below.

In the foregoing arrangement, in a case that the input video signal 1 is a digital signal, it goes without saying that the video signal processing unit 2 does not need to have an A/D converting function of converting an analog signal into a digital signal or has a function of passing through the A/D converting function unit.

Fig. 2 illustrates an example of a gamma correction characteristic of the gamma correcting unit 4 shown in Fig. 1. Fig. 2 shows relation between an input tone level of the digital video signal and a brightness (luminance) of a displayed image. In Fig. 2, a numeral 9 denotes a gamma correction characteristic. Filled dots (9a to 9h) in Fig. 2 denote gamma adjustment points. On the gamma correction of the adjustment menu (to be discussed below), the gamma adjustment points are specified and the gamma correction characteristic is corrected (the brightness is changed) on each of the adjustment points. As a result, a plurality of tones are adjusted. In addition, characters a to h denote input tone levels for the gamma adjustment points.
Hereafter, those tones are referred to as the "adjustment tones" because they are the input tones for the gamma adjustment points.

A plurality of gamma correction characteristics are preset in the memory 30. Then, by carrying out the foregoing adjustment with respect to the user's most favorable one of the preset gamma correction characteristics, it is possible to reduce the adjustment time.

In this embodiment, the input tone level a of the gamma correction point 9a is the lowest tone value (0 in the case of a 8-bit tone) and the input tone level h of the gamma adjustment point 9h is the highest tone value (255 in the case of the 8-bit tone). The number of the adjustment points is 8. In the present invention, however, the other values may be used.

The gamma correction value for the input level (tone) between the adjacent adjustment points is determined by performing the interpolation of the gamma correction values before and after the adjustment points. Further, the gamma correction value given after the gamma adjustment is given a different name (sign) from the gamma correction characteristics preset in the memory 30 and is newly stored in the memory 30. The newly stored data correspond to the user' set gamma correction characteristic data 900 shown in Fig. 1.

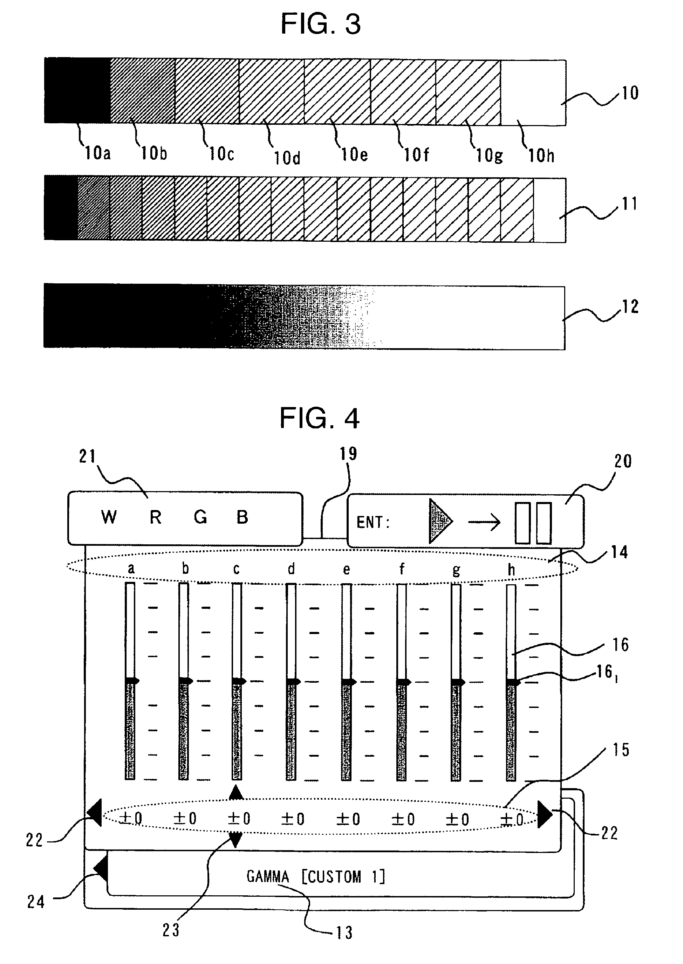

Fig. 3 illustrates an example of the adjustment patterns to be displayed on the screen, those patterns being pre-stored in the memory 30. The memory 30 pre-stores a plurality of adjustment pattern data 100. In response to an instruction given from the input unit 6, one adjustment pattern is switchably selected from a plurality of adjustment patterns such as the adjustment patterns 10, 11, 12 and is displayed on screen.

In Fig. 3, by making each signal tone level of the gray scale patterns (10a to 10h) composing the adjustment pattern 10 closer to the adjustment tone value (a to h) of each gamma adjustment point (9a to 9h), the luminances of the gamma adjustment points are respectively made to match to the luminances of the adjustment patterns at a ratio of 1 to 1. For example, when the gamma adjustment point 9c shown in Fig. 2 is adjusted from a filled dot position to the open dot position, that is, toward the brighter tone, as shown by a curve 91 shown by dotted line of Fig. 2, only the luminance of the gamma and the brightness (luminance) of the pattern of the gray scale pattern 10c are changed. It means that no other gamma adjustment point influences the target gamma adjustment point. Hence, by sequentially adjusting the gamma adjustment points as viewing the display, the user is not required to repetitively carry out the adjustments on plural adjustment points, thereby making the gamma adjustment more efficient.

Fig. 4 shows the adjustment menu for gamma adjustment according to one embodiment of the present invention. In Fig. 4, the adjustment menu for gamma adjustment (referred to as the "gamma adjustment menu") 19 is composed of an adjustment item display portion 13 for displaying an adjustment item, a gamma adjustment tone level display portion 14 for indicating the adjustment tone levels of eight gamma adjustment points (9a to 9h) to be described with reference to Fig. 2, a scroll bar display portion 16 for displaying an adjustment value of each gamma adjustment point shifted from the default point corresponding to the gamma correction characteristic set to the gamma correcting unit 4 from the memory 30 with a scroll bar 16₁, those adjustment values being compared with one another in an analog manner, a gamma adjustment value display portion 15 for displaying an adjustment value of each adjustment tone (a to h) shifted from the default value by a relative numeric value, a PLAY/PAUSE state display portion 20 for displaying a normal display or a still display of an image being inputted from the outside, and an adjustment color display portion 21 for displaying an adjustment color of the selected gamma adjustment.

In Fig. 4, a numeral 22 denotes a horizontal cursor for specifying a type of a direction button when selecting an adjustment tone (a to h) of the gamma adjustment tone level display portion 14. A numeral 23 denotes a vertical cursor for indicating the adjustment tone (a to h) selected by the gamma adjustment tone level display portion 14 and specifying a type of a directional button when changing the gamma correction characteristic at the selected adjustment tone. Further, a numeral 24 denotes a cursor for specifying a type of a directional button (for example, the left button) to be handled when returning the higher layer.

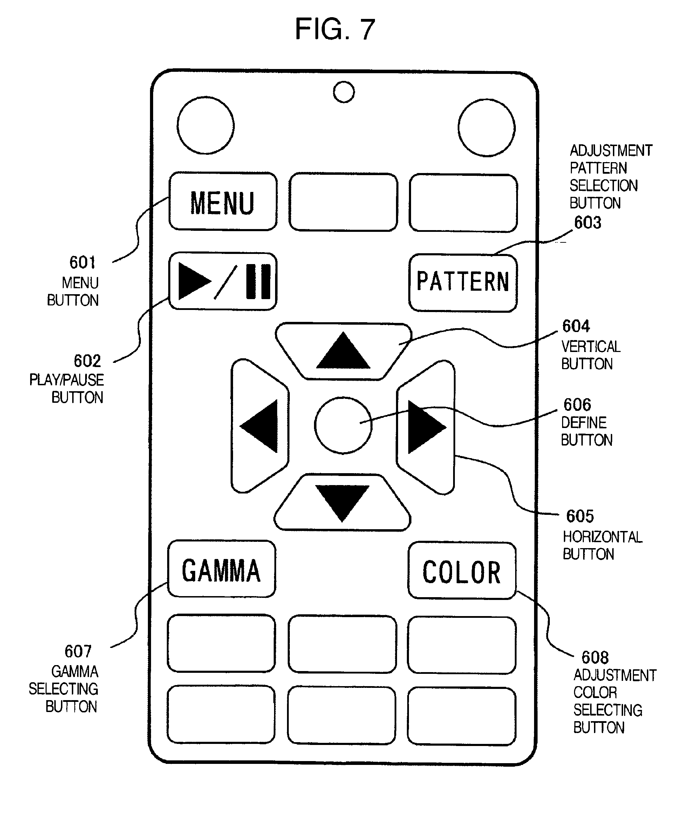

Herein, the essential buttons related to the following description, located on the remote controller that is an example of the input unit 6, will be described with reference to Fig. 7. Fig. 7 shows location of the buttons on the remote controller that is an example of the input unit. In Fig. 7, a numeral 601 denotes a menu button for displaying an adjustment menu. A numeral 602 denotes a PLAY/PAUSE button for switching a normal display (moving image display) or a still image display of the displayed image. A numeral 603 denotes an adjustment pattern selecting button for selecting a target one of plural adjustment patterns as shown in Fig. 3. A numeral 604 denotes a vertical direction button. A numeral 605 denotes a horizontal direction button. A numeral 606 denotes a define button. A numeral 607 denotes a gamma selecting button for selecting a target one of the gamma correction characteristics (including the user's set gamma correction characteristic to be discussed below) stored in the memory 30. A numeral 608 denotes an adjustment color selecting button for selecting a gamma adjustment color to be used when executing the gamma adjustment. In the following description, the remote controller is used as the input unit 6 for the descriptive convenience's sake.

Turning to Fig. 4, when the gamma adjustment menu 19 is displayed, for example, by moving the vertical cursor 23 with the horizontal button 605 located on the remote controller that is the input unit 6, the user selects the adjustment tone for gamma adjustment (gamma adjustment point) of the gamma adjustment tone level display portion 14. At a certain position of the vertical cursor 23, the selected adjustment tone is displayed. Then, on the selected adjustment tone (gamma adjustment point), the brightness of the image is adjusted by the vertical button 604, for example. The adjustment value is displayed as a relative numeric value with the default value as its standard or displayed with the scroll bar 16₁ on the scroll bar display portion 16. Since all the adjusted states for the overall input level tone are displayed with the adjustment values and the scroll bars at a time, the user may easily make sure of the overall adjusted states. Each time adjusted, the CPU 7 causes the gamma-adjusted result to be stored in (the user's set gamma correction characteristic data 900) in the memory 30 shown in Fig. 1 with a predetermined user registration name ("GAMMA [CUSTOM1]" in this embodiment). At this time, the sign (a figure herein) of "CUSTOM" is made to correspond with a preset sign of the adjusted original gamma correction characteristic so as to grasp the adjusted original preset gamma correction characteristic. This is because the use can grasp the original preset gamma correction characteristic as the standard since the gamma-corrected state is indicated with the default value as its standard. In the embodiment shown in Fig. 4, therefore, the name of the preset standard gamma correction characteristic is, for example, "GAMMA[PRESET1]".

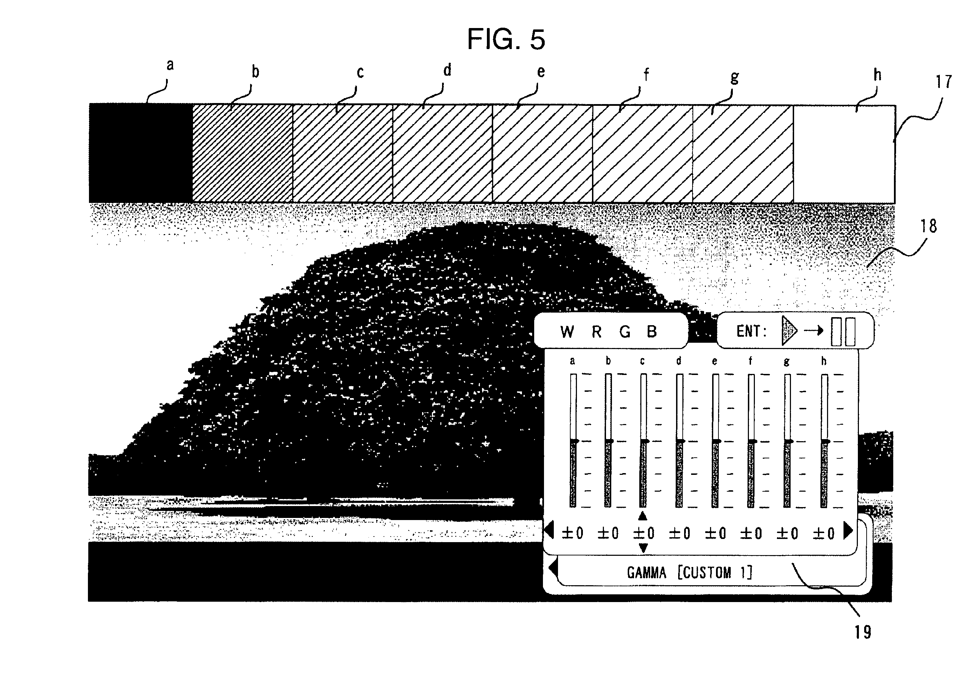

Fig. 5 shows an example of a display of a gamma adjustment system according to the present invention. In Fig. 5, on the screen of the liquid crystal panel 5 is displayed the input image 18 of a still image corrected on a predetermined gamma correction characteristic. As will be obvious from Fig. 5, on the upper portion of the screen is displayed an adjustment pattern 17 (for example, an adjustment pattern 10 shown in Fig. 3). On the lower right portion of the screen is displayed the gamma adjustment menu 19. As described above, according to the present invention, the gamma-corrected input image 18, the adjustment pattern 17 for aiding in the gamma adjustment, and the gamma adjustment menu 19 for representing the adjustment items and the adjustment values (numeric values and scroll bars) are displayed on the same screen. Hence, the user can easily grasp the result gamma-adjusted with the adjustment pattern 17 and the gamma adjustment menu 19 from the input image 18. In a case that the user would like to make sure of the adjusted state from another image, the user changes the still image display into the moving image display with the PLAY/PAUSE button 602 of the input unit 6 and then changes the moving image display into the still image display at a target image spot with the PLAY/PAUSE button 602 again. This handling allows the user to easily make sure of the adjusted state on another still image. In addition, the user can grasp if the input image is a moving image or a still image on the PLAY/PAUSE state display portion 16 of the gamma adjustment menu 19.

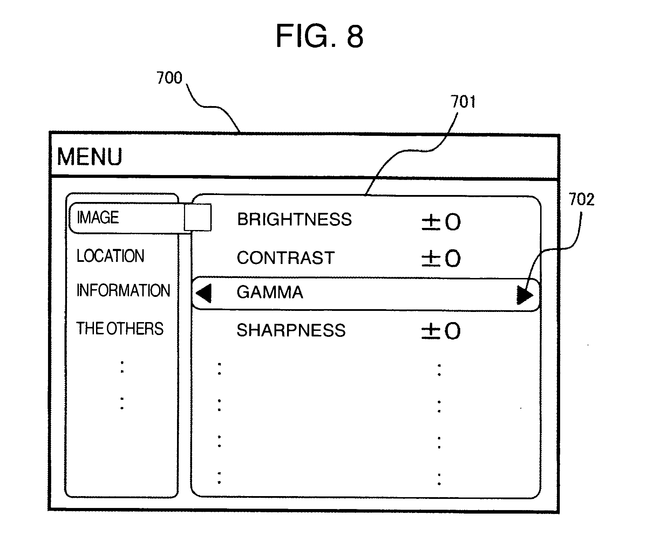

Fig. 8 shows an example of an adjustment menu display. In Fig. 8, the adjustment menu 700 indicates the image item. For example, when the "Image" is selected, the adjustment item 701 about the image is displayed. Then, when the user moves the cursor 702 to the adjustment item "Gamma" with the vertical button 604 and then presses the define button 606, the adjustment item "Gamma" is selected, and the adjustment pattern 17 and the gamma adjustment menu 19 are displayed on the screen of the liquid crystal panel 5 as shown in Fig. 5.

Fig. 6 is a flowchart showing a gamma adjustment system according to one embodiment of the present invention. The following description will be expanded on the assumption that the memory 30 stores only the preset gamma correction characteristics and the currently set gamma correction characteristic is an initialized one because this is the first adjustment. In the gamma adjustment system according to this embodiment, for executing the gamma adjustment, as shown in Fig. 6, the user handles the menu button 601 of the input unit 6 at first. In response, the CPU 7 serves to display the adjustment menu 700 in a step 501 (hereafter, the step being referred simply to as "S"). When the user selects the gamma adjustment in the displayed items, as shown in Fig. 5, the CPU 7 serves to display the initialized adjustment pattern 17 and the gamma adjustment menu 19 on the screen of the liquid crystal panel 5. (If this is not the first adjustment, the CPU 7 serves to display the adjustment pattern used for the previous adjustment and the corresponding gamma adjustment menu with the gamma correction characteristic currently set to the gamma correcting unit 4.) Next, if, on a specific scene of the input image, the user handles the PLAY/PAUSE button 602 of the input unit 6 for selecting the adjustment screen, the CPU 7 serves to stop the moving image. This causes the still image to be displayed if the moving image is inputted during the adjustment time. Hence, the user can easily make sure of which portion of the image is to be adjusted.

If the user handles the adjustment pattern selecting button 603 of the input unit 6 for selecting the target adjustment pattern for gamma adjustment, the CPU 7 serves to display the adjustment patterns 10, 11, 12 as shown in Fig. 3 cyclically at each user's operation. This allows the target adjustment pattern for gamma adjustment to be selected (S502).

In turn, in S503, a target gamma correction characteristic is selected from the preset gamma correction characteristics stored in the memory 30. For example, if the user handles the gamma selecting button 607 of the input unit 6, the CPU 7 serves to cyclically display the names (for example, "GAMMA [PRESET1]", "GAMMA [PRESET2]",...) of the gamma correction characteristics stored in the memory 30 at each user's operation in the adjustment item display portion 13 of the gamma adjustment menu 19, set the corresponding gamma correction characteristic to the gamma correcting unit 4, and display the adjustment pattern 17 and the input image at the corresponding gamma correction characteristic. This thus allows the target gamma correction characteristic to be selected.

Then, in S504, an adjustment color for gamma adjustment is selected. For example, if the adjustment color selecting button 608 of the input unit 6 is handled, the CPU 7 serves to sequentially highlight white, red, green and blue on the adjustment color display portion 21 of the gamma adjustment menu 19 at each user's operation, for indicating the target color. This thus allows the target adjustment color to be selected. Since the white balance is taken in shipping products, normally, the white gamma correction characteristic adjustment is selected. Though the gamma correction characteristic is composed of red, green and blue gamma correction characteristics, when the white gamma correction characteristic is adjusted, each color gamma correction characteristic is adjusted at a time.

Next, in S505, the user can make sure of the corresponding gamma adjustment menu 19 with the target gamma correction characteristic selected in the foregoing step.

Next, in S506, a target adjustment tone is selected. This selection is carried out, for example, by horizontally moving the position of the vertical cursor 23 on the gamma adjustment menu 19 with the horizontal button 605 of the input unit 6. Then, the luminance level of the adjustment tone selected in S507 is adjusted by using the vertical button 604 of the input unit 6 as watching the adjustment pattern 17 and the still image 18. At a time, if the adjustment pattern 10 shown in Fig. 3 is used as the adjustment pattern 17, the tone of each gray scale pattern (for example, c) of the adjustment pattern is made to correspond with each adjustment tone (for example, c) of the gamma adjustment tone level display portion 14 of the gamma adjustment menu 19 at a ratio of 1 : 1. Further, as stated above with reference to Fig. 2, since the adjustment value of the target adjustment tone does not influence the adjustment values and the patterns of the adjustment tones before and after the target adjustment tone, it is not necessary to repetitively adjust a plurality of adjustment points, thereby being able to easily check which of the image level is being adjusted. Further, since the shift amount of the adjusted state from the default value may be grasped by the relative numeric values of the gamma adjustment value display portion 15 and the positions of the scroll bars 16₁ of the scroll bar display portion 16, the user can easily make sure of what adjustment was executed with respect to all the adjustment tones.

Then, the processes of S506 and S507 are repeated for each adjustment tone. If the target tone adjustment is achieved in S508, the user handles the menu button 601 in S509 for erasing the adjustment pattern 17 and the gamma adjustment menu 19 and then releases the gamma adjustment. At a time, the input image is switched from the still image into the moving image.

If the user would like to make the white color the bluish white in S508, the process goes back to S504. Then, the processes of S505 to S507 are repeated for the blue adjustment color. In this embodiment, as mentioned above, it is obvious that the gamma correction characteristic for an input video signal may be applied to the white balance adjustment in which the red, the blue and the green are independently adjusted.

Though not specifically described above, after the gamma correction characteristic is selected in S503, if the selected gamma correction characteristic is adjusted by handling the vertical button 604, it is assumed that the preset gamma correction characteristic is changed. Hence, the name such as "GAMMA [PRESET1]" of the adjustment item display portion 13 of the gamma adjustment menu 19 is automatically set to another name such as "GAMMA[CUSTOM1]" with the matched name sign and then the set name is stored in the memory 30. This storage is executed each time the vertical button 604 is handled.

In this embodiment, when the position of the vertical cursor 23 is selected as horizontally moving the cursor 23 with the horizontal button 605 of the input unit 6, the gray scale pattern of the corresponding adjustment pattern 17 with the selected adjustment tone is not highlighted by a thick frame. It may be highlighted by the thick frame. If highlighted, the adjusted state is made more obvious and the operability improved.

Also in this embodiment, the gamma correction characteristic of red, green or blue may be individually adjusted. In actual, the adjustment is not limited to this. If each color gamma correction characteristic is not adjusted, it is possible to delete the process of S504 from the flowchart of Fig. 6.

Also in this embodiment, though the adjustment pattern is inputted into the overlapping unit 35, another way may be adopted. For example, when the adjustment pattern data stored in the memory 30 is transferred to the frame memory 3 through the CPU 7 and the input image data is read from the frame memory 3, it is possible to replace the input image data of the adjustment pattern display area with the adjustment pattern data.

Also in this embodiment, the result adjusted by the user on the basis of the preset gamma correction characteristic is displayed as the adjusted values on the gamma adjustment value display portion 15 and as the relative values on the scroll bar display portion 16. Another way may be used. For example, it is possible to display the corresponding gamma correction value with each adjustment tone as an absolute value.

As set forth above, the present invention does not need a special adjusting technique and apparatus for those adjustments and provides the display device and the adjusting method which are arranged to efficiently obtain an intended brightness of an image for a short time.

Though the foregoing description has been expanded along the embodiments, the present invention is not limited to those embodiments. It is to be understood by the persons skilled in the art that many changes and modifications are made possible without departing from the spirit of the invention and the scope of appended claims.

### BRIEF DESCRIPTION OF THE DRAWINGS

[Fig. 1] Fig. 1 is a schematic block diagram showing a display device according to one embodiment of the present invention;
[Fig. 2] Fig. 2 is a graph showing a gamma correction characteristic used in a gamma correcting unit shown in Fig. 1;
[Fig. 3] Fig. 3 is a view showing adjustment patterns for gamma adjustment according to one embodiment of the present invention;
[Fig. 4] Fig. 4 is a view showing a gamma adjustment menu according to one embodiment of the present invention;
[Fig. 5] Fig. 5 is an explanatory view showing a gamma adjustment screen appearing on the display device according to one embodiment of the present invention;
[Fig. 6] Fig. 6 is a flowchart showing an adjusting system according to one embodiment of the present invention;
[Fig. 7] Fig. 7 is a view showing an exemplary location of buttons on a remote controller that corresponds to an input unit; and
[Fig. 8] Fig. 8 is a view showing an example of an adjustment menu screen.

## Claims

1. A display device being **characterized by** comprising:
gamma correcting means for executing a gamma correction with respect to an input video signal;
gamma adjusting means for displaying an adjusted state having an adjustment pattern signal for gamma adjustment and a gamma correction value; and
display means for extracting a specific still image from said input image and displaying on said still image said still image gamma-corrected by said gamma correcting value means; and
said adjustment pattern signal, said gamma correction value and said gamma-corrected still image being displayed on the same screen.

2. A display device as claimed in claim 1, wherein said gamma correcting means is arranged to execute at least one of gamma adjustment and white balance adjustment according to an input intensity level of said video signal and to have storage means for storing data based on said adjustment amount.

3. A display device as claimed in claim 1, wherein said gamma adjusting means is arranged to select one of a prepared plural gamma characteristics and to adjust a correction value on the basis of said selected gamma characteristic.

4. A display device as claimed in claim 1, wherein said adjustment pattern signal is selected from a plurality of adjustment pattern signals and is displayed.
